# EUROPEAN PATENT APPLICATION

(11) **EP 4 728 892 A1**
(43) Date of publication of application: **22.04.2026**
(21) Application number: 24842243.8
(22) Date of filing: 09.07.2024
(51) Int. Cl.: A24F 40/40, A24F 40/90

(54) **AEROSOL GENERATION APPARATUS**

(30) Priority: 20.07.2023 CN 202310898269
(71) Applicant: Shenzhen First Union Technology Co., Ltd., Shenzhen, Guangdong 518000 (CN)
(72) Inventor: GUO, Cirong, Shenzhen, Guangdong 518000 (CN); ZHANG, Zhenhua, Shenzhen, Guangdong 518000 (CN); WU, Huidong, Shenzhen, Guangdong 518000 (CN); XU, Zhongli, Shenzhen, Guangdong 518000 (CN); LI, Yonghai, Shenzhen, Guangdong 518000 (CN)
(74) Representative: Ran, Handong
(86) International application number: PCT/CN2024/104436
(87) International publication number: WO 2025/016248

(57) **Abstract**

An aerosol generation apparatus (1000). The aerosol generation apparatus (1000) comprises a heating body (400), a microphone controller (300), a power source (500), a boost circuit (100) and a switch circuit (200), wherein the heating body (400) heats an aerosol generation matrix to generate an aerosol; when an airflow change caused by a vaping action is detected, the microphone controller (300) outputs a first voltage; the power source (500) is electrically connected to the microphone controller (300), so as to supply power to the microphone controller (300); the boost circuit (100) is started on the basis of the first voltage, further boosts a voltage of the power source (500), and outputs a second voltage, and a power supply loop used for guiding a current for the heating body (400) is established between the boost circuit (100), the microphone controller (300) and the heating body (400); the switch circuit (200) is electrically connected to the microphone controller (300); and after the microphone controller (300) outputs the first voltage, the switch circuit (200) switches the power source (500) to the boost circuit (100), so as to supply power to the microphone controller (300) by means of the second voltage, and the switch circuit turns on the power supply loop at the same time. The aerosol generation apparatus (1000) can improve the stability of power provided by a battery to the heating body (400).

## Description

### CROSS-REFERENCE TO RELATED APPLICATIONS

The present application claims priority to Chinese Patent Application No. 202310898269.5, entitled "AEROSOL-GENERATING DEVICE" filed with the China National Intellectual Property Administration on July 20, 2023, which is incorporated herein by reference in its entirety.

### TECHNICAL FIELD

The present application relates to the technical field of an aerosol-generating device, and particularly relates to an aerosol-generating device.

### BACKGROUND

With the development and popularization of electronic atomization technologies, application of an aerosol-generating device is increasingly wide. The most important component of the aerosol-generating device is a heating body. The heating body heats an aerosol-generating substrate, for example, a liquid substrate, so that the aerosol-generating substrate can generate an aerosol. In an existing aerosol-generating device, a battery is generally used to directly supply power to the heating body in a vaping process.

However, the power of the heating body changes as the battery level changes, so the power of the heating body is unstable. For example, as vaping is performed, the battery level will be consumed, and an output voltage of the battery attenuates. Accordingly, the power output level to the heating body will decrease, creating a significant difference on the aerosol level (TPM) generated by the aerosol-generating device during a subsequent vaping action in comparison to a previous vaping action, and the user's vaping experience will be affected.

### SUMMARY

Embodiments of the present application aim at providing an aerosol-generating device capable of improving the stability of power provided to a heating body in a vaping process of a user.

In order to achieve the above objective, in a first aspect, the present application provides an aerosol-generating device, including: a heating body, configured to heat an aerosol-generating substrate to generate an aerosol; a microphone controller, configured to output a first voltage when an airflow change caused by a vaping action is detected; a power source, electrically connected to the microphone controller so as to supply power to the microphone controller; a boost circuit, electrically connected between the microphone controller and the power source and configured to be activated on the basis of the first voltage, boost a voltage of the power source, output a second voltage, and establish a power supply loop used for guiding a current for the heating body between the boost circuit, the microphone controller and the heating body; and a switch circuit, electrically connected to the microphone controller, where the switch circuit is configured to switch the power source to the boost circuit after the microphone controller outputs the first voltage to supply power to the microphone controller at the second voltage, while turning on the power supply loop.

In one or more embodiments, the power source directly supplies power to the microphone controller when the microphone controller does not output the first voltage.

In one or more embodiments, the switch circuit is further configured to cut off the power directly supplied by the power source to the microphone controller after the microphone controller outputs the first voltage.

In one or more embodiments, the switch circuit includes a delay control branch configured to turn on the power supply loop after a first duration of delay starting from the output of the first voltage by the microphone controller.

In one or more embodiments, the delay control branch includes: a first energy storage sub-branch electrically connected to the microphone controller and configured to charge and discharge on the basis of the first voltage; and a first switch sub-branch electrically connected to the first energy storage sub-branch and the heating body, respectively and configured to turn on or cut off the power supply loop on the basis of a voltage change in a charging and discharging process of the first energy storage sub-branch.

In one or more embodiments, the first energy storage sub-branch includes a first resistor and a first capacitor. A first end of the first resistor is electrically connected to the microphone controller, a second end of the first resistor is electrically connected to the first switch sub-branch and a first end of the first capacitor, respectively, and a second end of the first capacitor is grounded.

In one or more embodiments, the first switch sub-branch includes a first switching transistor. A first end of the first switching transistor is electrically connected to the first energy storage sub-branch, a second end of the first switching transistor is grounded, a third end of the first switching transistor is electrically connected to a negative electrode of the heating body, and a positive electrode of the heating body is electrically connected to the microphone controller.

In one or more embodiments, the first switch sub-branch includes a second resistor, a second switching transistor and a third switching transistor; and a first end of the second switching transistor is electrically connected to the first energy storage sub-branch, a second end of the second switching transistor is grounded, a third end of the second switching transistor is electrically connected to a first end of the second resistor and a first end of the third switching transistor, respectively, a second end of the third switching transistor is electrically connected to a second end of the second resistor and the microphone controller, respectively, a third end of the third switching transistor is electrically connected to the positive electrode of the heating body, and the negative electrode of the heating body is grounded.

In one or more embodiments, the switch circuit includes a second energy storage sub-branch and a second switch sub-branch; the second energy storage sub-branch is electrically connected to the boost circuit and the second switch sub-branch, respectively, and the second switch sub-branch is electrically connected between the power source and the microphone controller; the second energy storage sub-branch is configured to charge and discharge on the basis of a change of the second voltage; and the second switch sub-branch is configured to turn on or cut off the electrical connection between the power source and the microphone controller on the basis of a voltage change in the charging and discharging process of the second energy storage sub-branch.

In one or more embodiments, the second energy storage sub-branch includes a third resistor, a second capacitor and a first diode; and a first end of the third resistor is electrically connected to the boost circuit and the second switch sub-branch, respectively, a second end of the third resistor is electrically connected to a first end of the second capacitor, an anode of the first diode and the second switch sub-branch, respectively, a second end of the second capacitor is grounded, and a cathode of the first diode is electrically connected to the boost circuit.

In one or more embodiments, the second switch sub-branch includes a fourth switching transistor, a fifth switching transistor and a fourth resistor; and a first end of the fourth resistor is electrically connected to a second end of the fourth switching transistor and the boost circuit, respectively, a second end of the fourth resistor is electrically connected to a first end of the fourth switching transistor and a third end of the fifth switching transistor, respectively, a third end of the fourth switching transistor is electrically connected to the power source, a first end of the fifth switching transistor is electrically connected to the second energy storage sub-branch, and a second end of the fifth switching transistor is grounded; or the first end of the fifth switching transistor is electrically connected to the second energy storage sub-branch, the second end of the fifth switching transistor is electrically connected to the second end of the fourth switching transistor and the boost circuit, respectively, the third end of the fifth switching transistor is electrically connected to the first end of the fourth switching transistor and the first end of the fourth resistor, respectively, the third end of the fourth switching transistor is electrically connected to the power source, and the second end of the fourth resistor is grounded.

In one or more embodiments, the aerosol-generating device further includes a boost enable circuit; and the boost enable circuit is electrically connected to the microphone controller and the boost circuit, respectively, and is configured to output an enable signal to the boost circuit on the basis of the first voltage so as to enable the boost circuit to operate.

In one or more embodiments, the aerosol-generating device further includes a feedback control circuit; and the feedback control circuit is electrically connected to the boost enable circuit and the boost circuit, and is configured to output a feedback signal to the boost circuit on the basis of the first voltage.

In one or more embodiments, the boost enable circuit includes a second diode and a third capacitor; and an anode of the second diode is electrically connected to the microphone controller and a positive electrode of the heating body, respectively, a cathode of the second diode is electrically connected to a first end of the third capacitor and the boost circuit, respectively, and a second end of the third capacitor is grounded.

In one or more embodiments, the feedback control circuit includes a sixth switching transistor; and a first end of the sixth switching transistor is electrically connected to a first end of the boost enable circuit, a second end of the sixth switching transistor is grounded, and a third end of the sixth switching transistor is electrically connected to the boost circuit.

The present application has the following beneficial effects: an aerosol-generating device provided by the present application includes a heating body, a boost circuit, a switch circuit and a microphone controller. The microphone controller is electrically connected to the boost circuit, the switch circuit, the heating body and the power source, respectively. In addition, the boost circuit is electrically connected between the microphone controller and the power source. When an airflow change caused by a vaping action is detected by the microphone controller, the microphone controller outputs a first voltage, which in turn triggers the activation of the boost circuit. The boost circuit then boosts a voltage of the power source to a second voltage, and outputs the second voltage. Then, the switch circuit turns on a power supply loop supplying a current to the heating body through the boost circuit. Through the above process, the effect of switching the direct power supply by the power source to the microphone controller into the power supply by the boost circuit to the microphone controller is achieved. In this case, even if a battery level of the power source gradually decreases, the boost circuit can supply stable working power to the heating body, so as to improve the stability of power provided to the heating body in a vaping process of a user.

### BRIEF DESCRIPTION OF THE DRAWINGS

One or more embodiments are exemplarily described with reference to corresponding accompanying drawings, and the exemplary descriptions do not construe a limitation to the embodiments. Components having same reference numerals in the accompanying drawings represent similar components, and unless otherwise particularly stated, figures in the accompanying drawings are not drawn to scale.
FIG. 1 is a schematic structural diagram of an aerosol-generating device provided by an embodiment of the present application.
FIG. 2 is a schematic structural diagram of a circuit portion in an aerosol-generating device provided by an embodiment of the present application.
FIG. 3 is a schematic structural diagram of a circuit portion in an aerosol-generating device provided by another embodiment of the present application.
FIG. 4 is a schematic structural diagram of a circuit, corresponding to a structure as shown in FIG. 3, provided by an embodiment of the present application.
FIG. 5 is a schematic structural diagram of a circuit, corresponding to a structure as shown in FIG. 3, provided by another embodiment of the present application.
FIG. 6 is a schematic structural diagram of a circuit portion in an aerosol-generating device provided by yet another embodiment of the present application.
FIG. 7 is a schematic structural diagram of a circuit, corresponding to a structure as shown in FIG. 6, provided by an embodiment of the present application.
FIG. 8 is a schematic structural diagram of a circuit, corresponding to a structure as shown in FIG. 6, provided by another embodiment of the present application.
FIG. 9 is a schematic structural diagram of a circuit portion in an aerosol-generating device provided by yet another embodiment of the present application.
FIG. 10 is a schematic structural diagram of a circuit portion in an aerosol-generating device provided by yet another embodiment of the present application.
FIG. 11 is a schematic structural diagram of a circuit, corresponding to a structure as shown in FIG. 10, provided by an embodiment of the present application.
FIG. 12 is a schematic structural diagram of a circuit, corresponding to a structure as shown in FIG. 10, provided by another embodiment of the present application.
FIG. 13 is a schematic structural diagram of a circuit portion in an aerosol-generating device provided by yet another embodiment of the present application.
FIG. 14 is a schematic structural diagram of a circuit portion in an aerosol-generating device provided by yet another embodiment of the present application.
FIG. 15 is a schematic structural diagram of a circuit, corresponding to a structure as shown in FIG. 14, provided by an embodiment of the present application.
FIG. 16 is a schematic structural diagram of a circuit, corresponding to a structure as shown in FIG. 14, provided by another embodiment of the present application.

### DETAILED DESCRIPTION

To make the objectives, technical solutions, and advantages of embodiments of the present application clearer, the following clearly and completely describes the technical solutions in the embodiments of the present application with reference to accompanying drawings in the embodiments of the present application. It is clear that the described embodiments are merely some rather than all of embodiments of the present application. All other embodiments obtained by a person of ordinary skill in the art based on the embodiments of the present application without creative efforts shall fall within the protection scope of the present application.

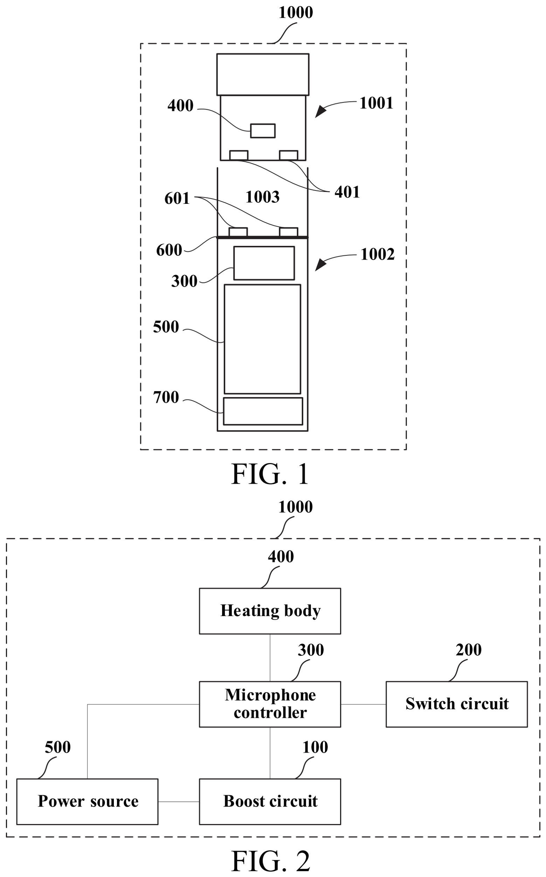

Referring to FIG. 1, FIG. 1 is a schematic structural diagram of an aerosol-generating device provided by an embodiment of the present application. As shown in FIG. 1, an aerosol-generating device 1000 includes an atomizer 1001 storing a liquid substrate and configured to atomize the liquid substrate to generate an aerosol, and a power supply mechanism 1002 configured to supply power to the atomizer 1001.

The atomizer 1001 includes a liquid storage cavity configured to store the liquid substrate, and an atomization component configured to draw the liquid substrate from the liquid storage cavity and heat to atomize the liquid substrate. The atomization component generally includes a liquid guide element configured to draw the liquid substrate, and a heating body 400 combined with the liquid guide element. The heating body 400 heats at least a portion of the liquid substrate of the liquid guide element during a power-on period to generate an aerosol. In an optional implementation, the liquid guide element includes a flexible fiber, such as a cotton fiber, a nonwoven fabric and a glass fiber rope, or includes a porous material with a microporous structure, such as porous ceramics. The heating element may be combined onto the liquid guide element through printing, deposition, sintering or physical assembly, or may be wound onto the liquid guide element. In some optional implementations, the heating body 400 may be a resistive heating mesh, a resistive heating coil, etc. In some other embodiments, the heating body 400 may also be a heating element wound by a flaky or reticular substrate.

The power supply mechanism 1002 includes a receiving cavity 1003 disposed at one end in a length direction and configured to receive and accommodate at least a portion of the atomizer 1001, and a first electrical contact 601 at least partially exposed in the receiving cavity 1003. The power supply mechanism 1002 is configured to form an electrical connection with the atomizer 1001 when at least a portion of the atomizer 1001 is received and accommodated in the power supply mechanism 1002, so as to supply power to the atomizer 1001.

A second electrical contact 401 is disposed on an end portion of the atomizer 1001 opposite to the power supply mechanism 1002 in a length direction. When at least a portion of the atomizer 1001 is received in the receiving cavity 1003, the second electrical contact 401 is in contact with and abutted against the first electrical contact 601 to form conduction.

A seal element 600 is disposed in the power supply mechanism 1002, and at least a portion of an internal space of the power supply mechanism 1002 is partitioned through the seal element 600 to form the above receiving cavity 1003. In this embodiment, the seal element 600 is configured to extend perpendicular to a longitudinal direction of the power supply mechanism 1002, and is preferably prepared from a flexible material, for example, silicone. Further, the liquid substrate seeping from the atomizer 1001 into the receiving cavity 1003 is prevented from flowing to components such as the microphone controller 300 inside the power supply mechanism 1002.

The power supply mechanism 1002 further includes a power source 500 disposed at the other end away from the receiving cavity 1003 in a length direction and configured to supply power. The power source may be a power source capable of providing electric power to the heating body 400, for example, a lithium-ion battery, a nickel battery, an alkaline battery, and/or other batteries. When it is needed, the power source 500 may supply electric power to the heating body 400.

The power supply mechanism 1002 further includes a microphone controller 300 disposed between the power source 500 and the receiving cavity 1003. The microphone controller 300 operably guides a current between the power source 500 and the first electrical contact 601. In use, the microphone controller 300 is configured to sense a vaping airflow generated by the atomizer 100 during vaping to further control the power source 500 to supply power to the atomizer 1001.

In this embodiment, the power supply mechanism 1002 is provided with a charging interface 700 at the other end away from the receiving cavity 1003. The charging interface 700 is configured to charge the power source 500.

It needs to be noted that a hardware structure of the aerosol-generating device 1000 as shown in FIG. 1 is only an example. In addition, the aerosol-generating device 1000 may have more or fewer components than a structure as shown in the figure, may combine two or more components, or may have different component configurations.

In addition, the aerosol-generating device 1000 shown in FIG. 1 may be applied to various different scenarios and play different roles. This is not specifically limited in the embodiments of the present application. For example, in an embodiment, the aerosol-generating device 1000 may be applied to the medical field. In this case, the aerosol-generating device 1000 may be a medical atomizer. The medical atomizer may atomize medicine liquid added into the medical atomizer and supply the atomized medicine liquid to a patient for inhalation to achieve an adjuvant therapy effect. For another example, in another embodiment, the aerosol-generating device 1000 may further be used as an electronic product, for example, an e-cigarette. The e-cigarette is an electronic product that converts a nicotine solution and other substances into an aerosol through atomization and similar processes for users to inhale.

Referring to FIG. 2, FIG. 2 is a schematic structural diagram of a circuit in an aerosol-generating device provided by an embodiment of the present application. As shown in FIG. 2, the aerosol-generating device 1000 further includes a boost circuit 100, a switch circuit 200 and a microphone controller 300. The microphone controller 300 is electrically connected to the boost circuit 100, the switch circuit 200, the heating body 400 and the power source 500, respectively. In addition, the boost circuit 200 is electrically connected between the microphone controller 300 and the power source 500. The microphone controller 300 is a sensor configured to detect and measure airflow.

Specifically, the microphone controller 300 is configured to output a first voltage when an airflow change caused by a vaping action is detected. The power source 500 is configured to supply power to the microphone controller 300. The boost circuit 100 is activated on the basis of the first voltage, boosts the voltage of the power source 500, and outputs a second voltage. In addition, a power supply loop used for guiding a current for the heating body 400 is established between the boost circuit 100, the microphone controller 300 and the heating body 400. The switch circuit 200 is configured to switch the power source 500 to the boost circuit after the microphone controller 300 outputs the first voltage to supply power to the microphone controller 300 at the second voltage, while turning on the power supply loop.

In this embodiment, when the microphone controller 300 does not detect an airflow change caused by a vaping action, the microphone controller 300 does not output a first voltage, and the boost circuit 100 and the switch circuit 200 remain in their current states.

When an airflow change caused by a vaping action is detected by the microphone controller 300, the microphone controller 300 outputs the first voltage. Then, the boost circuit 100 is activated. The boost circuit 100 boosts the voltage of the power source 500 to the second voltage, and outputs the second voltage. Then, the switch circuit 200 turns on the power supply loop for supplying a current to the heating body 400 through the boost circuit 100. The power supply loop at least includes a boost circuit 100, a microphone controller 300 and a heating body 400. Further, an effect of switching the direct power supply by the power source 500 to the microphone controller 300 into the power supply by the boost circuit 100 to the microphone controller 300 is achieved. In this case, even if a battery level of the power source 500 gradually decreases, the boost circuit 100 can supply stable working power to the heating body 400, so as to improve the stability of power provided to the heating body in a vaping process of a user, thereby improving the vaping experience of the user.

In an embodiment, the power source 500 directly supplies power to the microphone controller 300 when the microphone controller 300 does not output the first voltage, so that the microphone controller 300 keeps operating, and sustains the detection on the airflow.

In an embodiment, the switch circuit 200 is further configured to cut off the power directly supplied by the power source 500 to the microphone controller 300 after the microphone controller 300 outputs the first voltage.

Specifically, after the microphone controller 300 outputs the first voltage, the switch circuit 200 realizes controlling the boost circuit 100 to supply power to the microphone controller 300, but also realizes controlling the power source 500 to stop the direct power supply to the microphone controller 300. In conclusion, after the microphone controller 300 outputs the first voltage, there is only one loop supplying power to the microphone controller 300, and this loop is the loop supplying power to the microphone controller 300 by the power source 500 through the boost circuit 100.

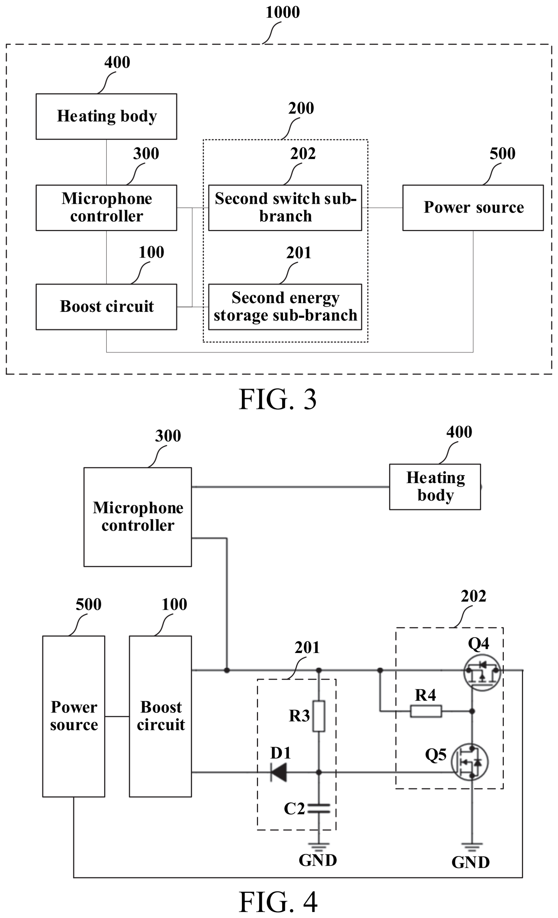

In an embodiment, as shown in FIG. 3, the switch circuit 200 includes a second energy storage sub-branch 201 and a second switch sub-branch 202. The second energy storage sub-branch 201 is electrically connected to the boost circuit 100 and the second switch sub-branch 202, respectively, and the second switch sub-branch 202 is electrically connected between the power source 500 and the microphone controller 300.

Specifically, the second energy storage sub-branch 201 is configured to charge and discharge on the basis of a change of the second voltage. The second switch sub-branch 202 is configured to turn on or cut off the electrical connection between the power source 500 and the microphone controller 300 on the basis of a voltage change in a charging and discharging process of the second energy storage sub-branch 201.

In this embodiment, after the boost circuit 100 is activated, the voltage output by the boost circuit 100 gradually increases. Before the voltage output by the boost circuit 100 increases to the stable second voltage, the power source 500 charges the second energy storage sub-branch 201. When the second energy storage sub-branch 201 is charged until the voltage of the second energy storage sub-branch 201 is higher than a conduction voltage drop of the second switch sub-branch 202, the second switch sub-branch 202 is turned on. The electrical connection between the power source 500 and the microphone controller 300 is turned on. The power source 500 supplies power to the microphone controller 300, so as to keep the stable operation of the microphone controller 300.

When the voltage output by the boost circuit 100 increases to the stable second voltage, the second energy storage sub-branch 201 discharges through the boost circuit 100. When the second energy storage sub-branch 201 is discharged until its voltage is lower than or equal to the conduction drop voltage of the second switch sub-branch 202, the second switch sub-branch 202 is cut off. An electrical connection between the power source 500 and the microphone controller 300 is cut off. The power source 500 stops the direct power supply to the microphone controller 300, and switches to use the second voltage output by the boost circuit 100 to supply power to the microphone controller 300 so as to provide stable working power for the microphone controller 300.

In addition, in this embodiment, the second energy storage sub-branch 201 and the second switch sub-branch 202 are configured to form the switch circuit. This allows receiving an enable signal of the microphone controller 300 by the second energy storage sub-branch 201 and determining the on-off state of the circuit by the intrinsic characteristics (for example, a threshold voltage or a gate threshold voltage) of components in the second switch sub-branch 202, so that the switching of a power supply source of the microphone controller 300 is realized. Compared with the prior art adopting the solution of realizing the power supply source switching by adding a logic controller/chip to control the switching transistor, the present application has significant cost advantages.

Referring to FIG. 4, FIG. 4 schematically shows a circuit structure of a second energy storage sub-branch 201. As shown in FIG. 4, the second energy storage sub-branch 201 includes a third resistor R3, a second capacitor C2, and a first diode D1.

A first end of the third resistor R3 is electrically connected to the boost circuit 100 and the second switch sub-branch 202, respectively, a second end of the third resistor R3 is electrically connected to a first end of the second capacitor C2, an anode of the first diode D1 and the second switch sub-branch 202, respectively, a second end of the second capacitor C2 is grounded, and a cathode of the first diode D1 is electrically connected to the boost circuit 100.

Specifically, the third resistor R3 is used for current limitation. The second capacitor C2 is used for charging and discharging. The first diode D1 is used for preventing current from flow backward from the boost circuit 100 to the second energy storage sub-branch 201 and the second switch sub-branch 202 so as to achieve a protection effect on the second energy storage sub-branch 201 and the second switch sub-branch 202.

FIG. 4 further schematically shows a circuit structure of a second switch sub-branch 202. As shown in FIG. 4, the second switch sub-branch 202 includes a fourth switching transistor Q4, a fifth switching transistor Q5 and a fourth resistor R4.

A first end of the fourth resistor R4 is electrically connected to a second end of the fourth switching transistor Q4 and the boost circuit 100, respectively, a second end of the fourth resistor R4 is electrically connected to a first end of the fourth switching transistor Q4 and a third end of the fifth switching transistor Q5, respectively, a third end of the fourth switching transistor Q4 is electrically connected to the power source 500, a first end of the fifth switching transistor Q5 is electrically connected to the second energy storage sub-branch 201, and a second end of the fifth switching transistor Q5 is grounded.

In this embodiment, the fifth switching transistor Q5 being an NMOS transistor, and the fourth switching transistor Q4 being a PMOS transistor are taken as an example for illustration. A gate of the NMOS transistor is the first end of the fifth switching transistor Q5, a source of the NMOS transistor is the second end of the fifth switching transistor Q5, and a drain of the NMOS transistor is the third end of the fifth switching transistor Q5. A gate of the PMOS transistor is the first end of the fourth switching transistor Q4, a source of the PMOS transistor is the second end of the fourth switching transistor Q4, and a drain of the PMOS transistor is the third end of the fourth switching transistor Q4.

In addition, the fourth switching transistor Q4 and the fifth switching transistor Q5 may be any controllable switches, such as an insulated gate bipolar transistor (IGBT) device, an integrated gate converter thyristor (IGCT) device, a gate turn-off thyristor (GTO) device, a silicon controlled rectifier (SCR) device, a junction field effect transistor (JFET) device, an MOS controlled thyristor (MCT) device.

The principle of the circuit structure as shown in FIG. 4 will be illustrated again hereafter.

After the microphone controller 300 outputs the first voltage so that the boost circuit 100 is activated, the voltage output by the boost circuit 100 gradually increases. Before the voltage output by the boost circuit 100 increases to the stable second voltage, the power source 500 charges the second capacitor C2 through a body diode of the fourth switching transistor Q4 and the third resistor R3. When the second capacitor C2 is charged until its voltage is higher than a conduction drop voltage of the fifth switching transistor Q5, the fifth switching transistor Q5 is turned on. The gate of the fourth switching transistor Q4 is grounded (GND), and the fourth switching transistor Q4 is also turned on. The fourth switching transistor Q4 turns on the electrical connection between the power source 500 and the microphone controller 300. The power source 500 supplies power to the microphone controller 300 through the fourth switching transistor Q4, so as to keep the stable operation of the microphone controller 300.

When the voltage output by the boost circuit 100 increases to the stable second voltage, the voltage of the second capacitor C2 performs discharging to the boost circuit 100 through the first diode D1. When the second capacitor C2 is discharged until its voltage is lower than or equal to a conduction drop voltage of the fifth switching transistor Q5, the fifth switching transistor Q5 is turned off, and the fourth switching transistor Q4 is also accordingly turned off. Then, an electrical connection between the power source 500 and the microphone controller 300 is cut off. The power source 500 stops the direct power supply to the microphone controller 300, and switches to use the second voltage output by the boost circuit 100 to supply power to the microphone controller 300 so as to provide stable working power for the microphone controller 300.

It needs to be noted that a hardware structure of the second energy storage sub-branch 201 and the second switch sub-branch 202 as shown in FIG. 4 is only an example. In addition, the second energy storage sub-branch 201 and the second switch sub-branch 202 may have more or fewer components than a structure as shown in the figure, may combine two or more components, or may have different component configurations. Various components shown in the figure may be implemented in hardware, software, or a combination of hardware and software, including one or more signal processing and/or special integrated circuits.

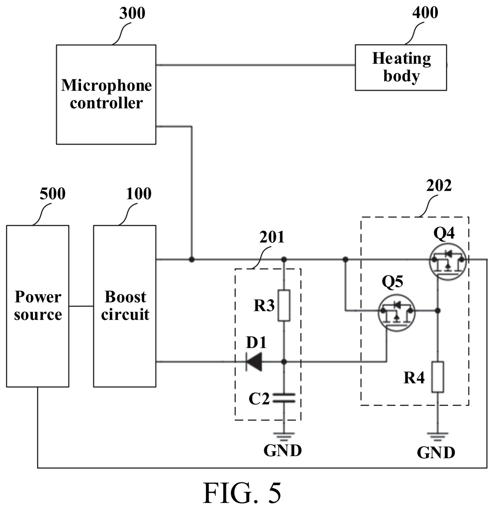

For example, as shown in FIG. 5, FIG. 5 schematically shows another circuit structure of a second switch sub-branch 202. The second switch sub-branch 202 still includes a fourth switching transistor Q4, a fifth switching transistor Q5 and a fourth resistor R4.

Specifically, the first end of the fifth switching transistor Q4 is electrically connected to the second energy storage sub-branch 201, the second end of the fifth switching transistor Q5 is electrically connected to the second end of the fourth switching transistor Q4 and the boost circuit 100, respectively, the third end of the fifth switching transistor Q5 is electrically connected to the first end of the fourth switching transistor Q4 and the first end of the fourth resistor R4, respectively, the third end of the fourth switching transistor Q4 is electrically connected with the power source 500, and the second end of the fourth resistor R4 is grounded (GND).

In this embodiment, both the fourth switching transistor Q4 and the fifth switching transistor Q5 both being PMOS transistors are taken as an example for illustration. A gate of the PMOS transistor is the first end of the fourth switching transistor Q4 (the fifth switching transistor Q5), a source of the PMOS transistor is the second end of the fourth switching transistor Q4 (the fifth switching transistor Q5), and a drain of the PMOS transistor is the third end of the fourth switching transistor Q4 (the fifth switching transistor Q5).

In this embodiment, the microphone controller 300 outputs the first voltage so that after the boost circuit 100 is activated, the voltage output by the boost circuit 100 gradually increases. Before the voltage output by the boost circuit 100 increases to the stable second voltage, the power source 500 charges the second capacitor C2 through a body diode of the fourth switching transistor Q4 and the third resistor R3. When the second capacitor C2 is charged until its voltage is higher than a cutoff drop voltage of the fifth switching transistor Q5, the fifth switching transistor Q5 is turned off. The gate of the fourth switching transistor Q4 is grounded (GND), and the fourth switching transistor Q4 is turned on. The fourth switching transistor Q4 turns on the electrical connection between the power source 500 and the microphone controller 300. Based on the above, before the voltage output by the boost circuit 100 increases to the stable second voltage, for example, within 10 ms after the boost circuit 100 starts to output the voltage, the direct power supply by the power source 500 to the microphone controller 300 may be realized by turning on the fourth switching transistor Q4. This further enables the heating body 400 to start operation timely and completely without delay, and the vaping experience of the user is favorably ensured.

Then, when the voltage output by the boost circuit 100 increases to the stable second voltage, the voltage of the second capacitor C2 performs discharging to the boost circuit 100 through the first diode D1. When the second capacitor C2 is discharged until its voltage is lower than or equal to a cutoff drop voltage of the fifth switching transistor Q5, the fifth switching transistor Q5 is turned on. The gate of the fourth switching transistor Q4 is pulled up by the second voltage, and the fourth switching transistor Q4 is turned off. Then, an electrical connection between the power source 500 and the microphone controller 300 is cut off. The power source 500 stops the direct power supply to the microphone controller 300, and switches to use the second voltage output by the boost circuit 100 to supply power to the microphone controller 300 so as to provide stable working power for the microphone controller 300.

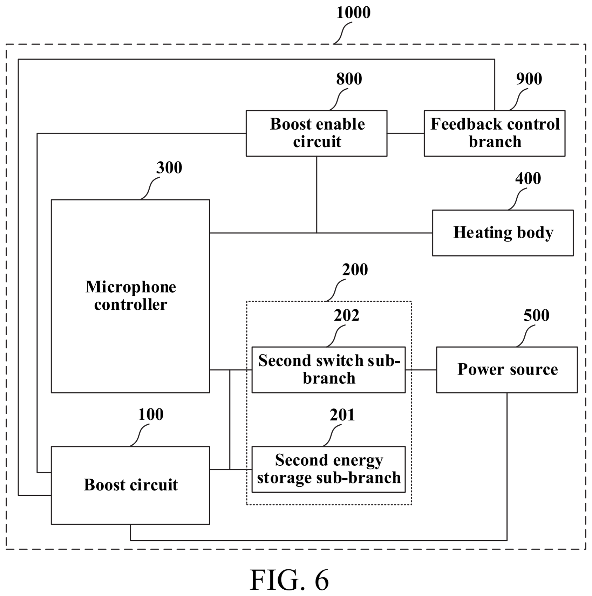

In another embodiment, as shown in FIG. 6, the aerosol-generating device 1000 further includes a boost enable circuit 800. The boost enable circuit 800 is electrically connected to the microphone controller 300 and the boost circuit 100, respectively.

Specifically, after the microphone controller 300 outputs the first voltage, the boost enable circuit 800 can output an enable signal to the boost circuit 100 on the basis of the first voltage, so that the boost circuit 100 operates. Therefore, the purpose of controlling the operation and cessation of the boost circuit 100 is achieved.

In another embodiment, continuously referring to FIG. 6, the aerosol-generating device 1000 further includes a feedback control circuit 900. The feedback control circuit 900 is electrically connected to the boost enable circuit 800 and the boost circuit 100.

Specifically, the feedback control circuit 900 is configured to output a feedback signal to the boost circuit 100 on the basis of the first voltage. Then, the boost circuit 100 may determine that the microphone controller 300 has output the first voltage. In addition, in another implementation, when the microphone controller 300 does not output the first voltage, the feedback control circuit 900 stops outputting the feedback signal to the boost circuit 100. That is, the purpose of stopping the operation of the feedback control circuit 900 when the microphone controller 300 does not output the first voltage is achieved, and the power consumption reduction is facilitated.

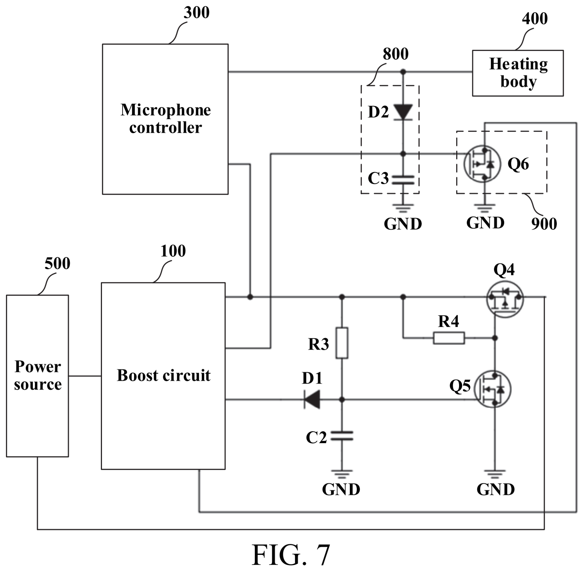

Referring to FIG. 7, FIG. 7 schematically shows a circuit structure of a boost enable circuit 800. As shown in FIG. 7, the boost enable circuit 800 includes a second diode D2 and a third capacitor C3.

An anode of the second diode D2 is electrically connected to the microphone controller 300 and a positive electrode of the heating body 400, respectively, a cathode of the second diode D2 is electrically connected to a first end of the third capacitor C3 and the boost circuit 100, respectively, and a second end of the third capacitor C3 is grounded (GND).

Specifically, the second diode D2 and the third capacitor C3 are configured for filtering. When the microphone controller 300 outputs the first voltage, the first voltage is filtered through the second diode D2 and the third capacitor C3 and is then output to the boost circuit 100 to activate the boost circuit 100.

FIG. 7 further schematically shows a circuit structure of a feedback control circuit 900. As shown in FIG. 7, the feedback control circuit 900 includes a sixth switching transistor Q6.

A first end of the sixth switching transistor Q6 is electrically connected to a first end of the boost enable circuit 800, a second end of the sixth switching transistor Q6 is grounded, and a third end of the sixth switching transistor Q6 is electrically connected to the boost circuit 100.

Specifically, when the microphone controller 300 outputs the first voltage, the first voltage is filtered through the second diode D2 and the third capacitor C3 and is then output to the gate of the sixth switching transistor Q6 to turn the sixth switching transistor Q6 on. The source of the sixth switching transistor Q6 outputs an enable signal (a low-level signal in this embodiment) to the boost circuit 100.

In this embodiment, the sixth switching transistor Q6 being an NMOS transistor is taken as an example. A gate of the NMOS transistor is the first end of the sixth switching transistor Q6, a source of the NMOS transistor is the second end of the sixth switching transistor Q6, and a drain of the NMOS transistor is the third end of the sixth switching transistor Q6.

In addition, the sixth switching transistor Q6 may be any controllable switch, such as an insulated gate bipolar transistor (IGBT) device, an integrated gate converter thyristor (IGCT) device, a gate turn-off thyristor (GTO) device, a silicon controlled rectifier (SCR) device, a junction field effect transistor (JFET) device, an MOS controlled thyristor (MCT) device.

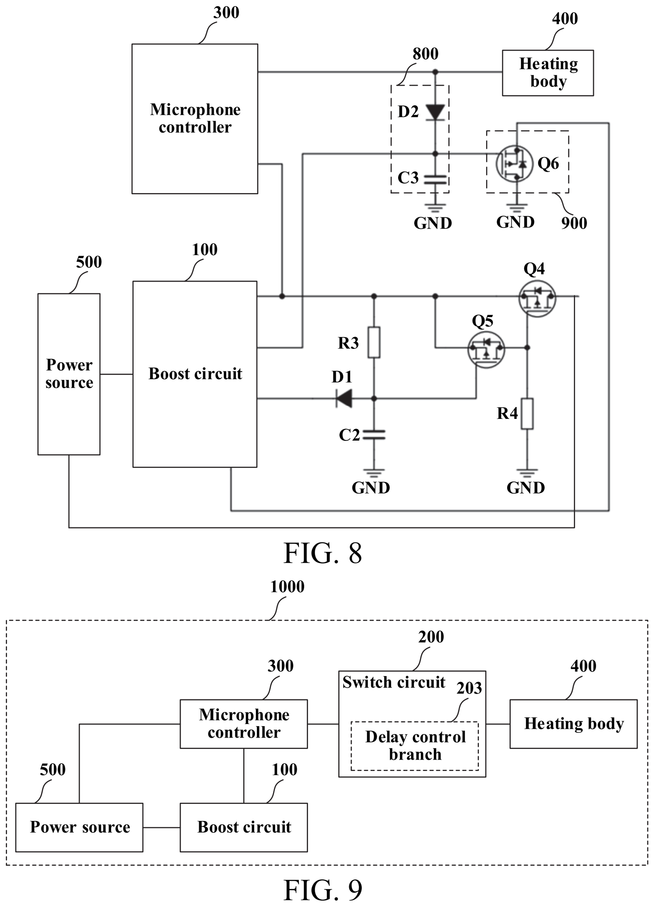

It could be understood that the circuit structure as shown in FIG. 7 is acquired by adding a boost enable circuit 800 and a feedback control circuit 900 on the basis of the circuit structure as shown in FIG. 4. A boost enable circuit 800 and a feedback control circuit 900 may also be added into the circuit structure as shown in FIG. 5, as specifically illustrated in FIG. 8. The principle of the circuit structure as shown in FIG. 8 may be referred to the description in FIG. 7, and it will not be repeated herein.

In addition, it needs to be noted that in the embodiments as shown in FIG. 3 to FIG. 8, a switch circuit 200 being disposed between the power source and the microphone controller 200 is taken as an example. In other embodiments, the switch circuit 200 may also be disposed between the heating body 400 and the microphone controller 300.

In an embodiment, as shown in FIG. 9, when the switch circuit 200 is disposed between the positive electrode of the heating body 400 and the microphone controller 300, the switch circuit 200 includes a delay control branch 203.

The delay control branch 203 is configured to turn on the power supply loop after a first duration of delay starting from the output of the first voltage by the microphone controller 300. The first duration is determined through the characteristics of the delay control branch 203, and may be set according to practical application scenarios. This is not specifically limited in embodiments of the present application. Through the appropriate setting of the first duration, the poor experience of the user caused by excessively noticeable aerosol delay may be favorably reduced after the aerosol-generating device 1000 initiates the vaping.

Specifically, after the microphone controller 300 outputs the first voltage, the boost circuit 100 is activated. In addition, a module supplying power to the microphone controller 300 switches from the power source 500 to the boost circuit 100. In this case, through the setting of the time delay of the first duration, the voltage output by the boost circuit 100 may gradually increase to the stable second voltage. Then, the power supply loop is turned on to provide stable voltage for the heating body 400. That is, stable working power is provided for the heating body 400.

In an implementation, as shown in FIG. 9, the delay control branch 203 includes a first energy storage sub-branch 2031 and a first switch sub-branch 2032. The first energy storage sub-branch 2032 is electrically connected to the microphone controller 300. The first switch sub-branch 2031 is electrically connected to the first energy storage sub-branch 2032 and the heating body 400, respectively.

Specifically, the first energy storage sub-branch 2032 is configured to charge and discharge on the basis of the first voltage. The first switch sub-branch 2031 turns on or off the power supply loop on the basis of a voltage change in a charging and discharging process of the first energy storage sub-branch 2032.

In this embodiment, after the microphone controller 300 outputs the first voltage, the first voltage charges the first energy storage sub-branch 2032. Before the first energy storage sub-branch 2032 is charged to a voltage higher than the conduction drop voltage of the first switch sub-branch 2031, the first switch sub-branch 2031 remains open.

When the first energy storage sub-branch 2032 is charged until its voltage is higher than the conduction drop voltage of the first switch sub-branch 2031, the first switch sub-branch 2031 is turned on. The electric connection between the microphone controller 300 and the heating body 400 is turned on. The microphone controller 300 supplies power to the heating body 400 so as to provide the stable working power for the heating body 400.

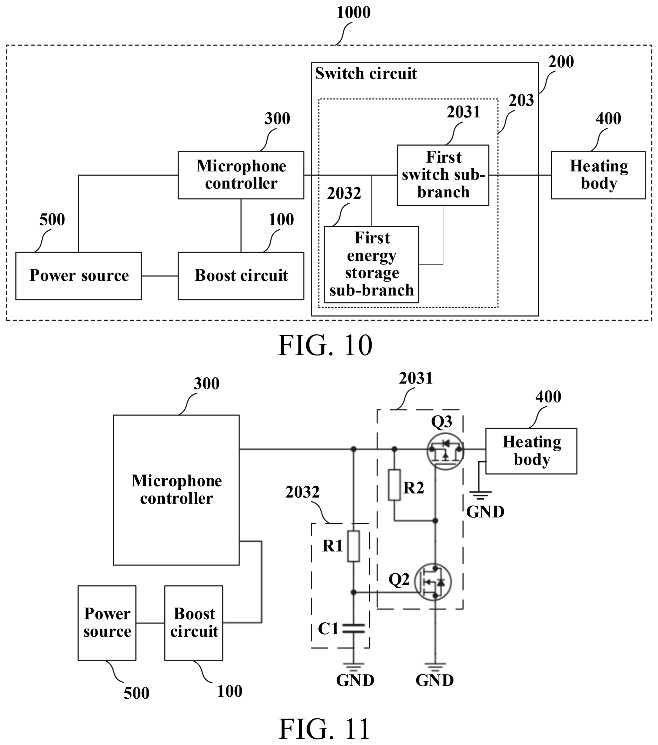

Referring to FIG. 11, FIG. 11 schematically shows a circuit structure of a first energy storage sub-branch 2032. As shown in FIG. 11, the first energy storage sub-branch 2032 includes a first resistor R1 and a first capacitor C1.

A first end of the first resistor R1 is electrically connected to the microphone controller 300, a second end of the first resistor R1 is electrically connected to the first switch sub-branch 2031 and a first end of the first capacitor C1, respectively, and a second end of the first capacitor C1 is grounded (GND).

Specifically, the first resistor R1 is used for current limitation. The first capacitor C1 is used for charging and discharging.

FIG. 11 further schematically shows a circuit structure of a first switch sub-branch 2031. As shown in FIG. 11, the first switch sub-branch 2031 includes a second resistor R2, a second switching transistor Q2 and a third switching transistor Q3.

A first end of the second switching transistor Q2 is electrically connected to the first energy storage sub-branch 2032, a second end of the second switching transistor Q2 is grounded (GND), a third end of the second switching transistor Q2 is electrically connected to a first end of the second resistor R2 and a first end of the third switching transistor Q3, respectively, a second end of the third switching transistor Q3 is electrically connected to a second end of the second resistor R2 and the microphone controller 300, respectively, a third end of the third switching transistor Q3 is electrically connected to the positive electrode of the heating body 400, and the negative electrode of the heating body 400 is grounded (GND).

In this embodiment, the second switching transistor Q2 being an NMOS transistor, and the third switching transistor Q3 being a PMOS transistor are taken as an example for illustration. A gate of the NMOS transistor is the first end of the second switching transistor Q2, a source of the NMOS transistor is the second end of the second switching transistor Q2, and a drain of the NMOS transistor is the third end of the second switching transistor Q2. A gate of the PMOS transistor is the first end of the third switching transistor Q3, a source of the PMOS transistor is the second end of the third switching transistor Q3, and a drain of the PMOS transistor is the third end of the third switching transistor Q3.

In addition, the second switching transistor Q2 and the third switching transistor Q3 may be any controllable switches, such as an insulated gate bipolar transistor (IGBT) device, an integrated gate converter thyristor (IGCT) device, a gate turn-off thyristor (GTO) device, a silicon controlled rectifier (SCR) device, a junction field effect transistor (JFET) device, an MOS controlled thyristor (MCT) device.

The principle of the circuit structure as shown in FIG. 11 will be illustrated again hereafter.

After the microphone controller 300 outputs the first voltage, the first voltage charges the first capacitor C1 through the first resistor R1. Before the first capacitor C1 is charged until its voltage is higher than a conduction drop voltage of the second switching transistor Q2, the second switching transistor Q2 remains off. The third switching transistor Q3 also remains off. In this case, the microphone controller 300 does not supply power to the heating body 400. That is, the power supply loop for guiding a current to the heating body 400 is in an off state. The first duration in the above embodiment is determined by the parameters of the first resistor R1 and the first capacitor C1. In some implementations, through configuring the parameters of the first resistor R1 and the first capacitor C1, the first duration may be set to any value within the range of 10 ms to 100 ms, so as to avoid the poor experience of the user caused by excessively noticeable aerosol delay.

Before the first capacitor C1 is charged until its voltage is higher than a conduction drop voltage of the second switching transistor Q2, the second switching transistor Q2 is turned on. The gate of the third switching transistor Q3 is grounded (GND), and forced to a low level, and the third switching transistor Q3 is turned on. The microphone controller 300 is electrically connected to the heating body 400 through the third switching transistor Q3. In this case, the power supply loop for guiding a current to the heating body 400 is turned on so as to provide stable working power for the heating body 400.

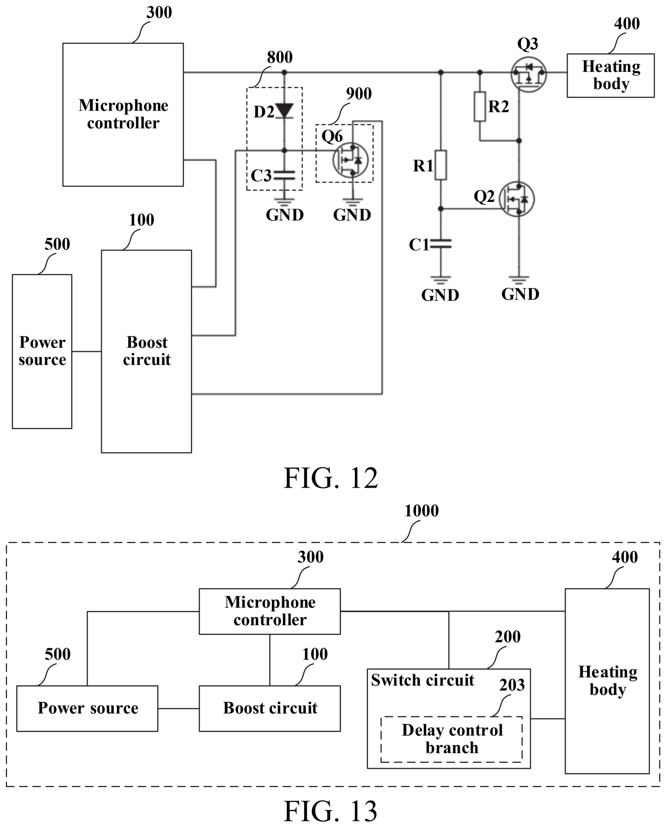

It could be understood that the boost enable circuit 800 and the feedback control circuit 900 as shown in FIG. 6 to FIG. 8 may also be applied to the structure as shown in FIG. 9 to FIG. 11. For example, FIG. 12 schematically shows a circuit structure obtained by applying the boost enable circuit 800 and the feedback control circuit 900 to the structure as shown in FIG. 11. A specific implementation process of the circuit principle may be referred to the description in FIG. 7 to FIG. 8, and it is not repeated herein.

In some implementations, the switch circuit 200 may also be electrically connected to the negative electrode of the heating body 400. In this case, as shown in FIG. 13, the switch circuit 200 may also include a delay control branch 203. In addition, the delay control branch 203 as shown in FIG. 13 has the same working principle as the delay control branch 203 as shown in FIG. 9, and it is not repeated herein.

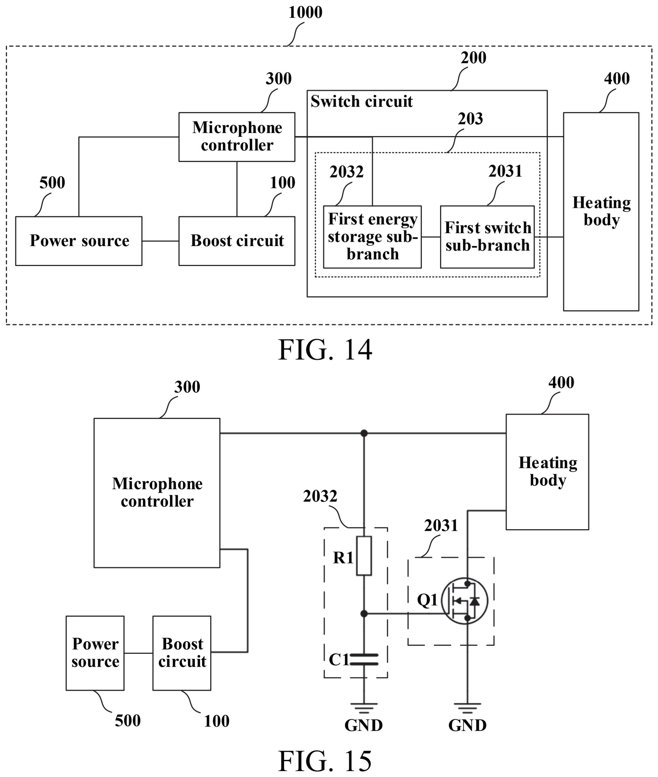

In addition, the delay control branch 203 as shown in FIG. 13 may also include a first switch sub-branch 2031 and a first energy storage sub-branch 2032. A specific circuit structure is as shown in FIG. 14. In addition, the first switch sub-branch 2031 and the first energy storage sub-branch 2032 shown in FIG. 14 have the same working principles as those shown in FIG. 10, and it is not repeated herein.

Referring to FIG. 15, FIG. 15 schematically shows a circuit structure corresponding to the structure as shown in FIG. 14. As shown in FIG. 15, the first switch sub-branch 2031 includes a first switching transistor Q1.

A first end of the first switching transistor Q1 is electrically connected to the first energy storage sub-branch 2032, a second end of the first switching transistor Q1 is grounded (GND), a third end of the first switching transistor Q1 is electrically connected to a negative electrode of the heating body 400, and a positive electrode of the heating body 400 is electrically connected to the microphone controller 300.

In this embodiment, the first switching transistor Q1 being an NMOS transistor is taken as an example. A gate of the NMOS transistor is the first end of the first switching transistor Q1, a source of the NMOS transistor is the second end of the first switching transistor Q1, and a drain of the NMOS transistor is the third end of the first switching transistor Q1.

In addition, the first switching transistor Q1 may be any controllable switch, such as an insulated gate bipolar transistor (IGBT) device, an integrated gate converter thyristor (IGCT) device, a gate turn-off thyristor (GTO) device, a silicon controlled rectifier (SCR) device, a junction field effect transistor (JFET) device, an MOS controlled thyristor (MCT) device.

In this embodiment, after the microphone controller 300 outputs the first voltage, the first voltage charges the first capacitor C1 through the first resistor R1. Before the first capacitor C1 is charged until its voltage is higher than a conduction drop voltage of the second switching transistor Q2, the first switching transistor Q1 remains off. The loop of the microphone controller 300 for supply power to the heating body 400 is in an off state. That is, the power supply loop for guiding the current to the heating body 400 is in an off state.

When the first capacitor C1 is charged until its voltage is higher than a conduction drop voltage of the first switching transistor Q1, the first switching transistor Q1 is turned on. A loop where the microphone controller 300 and the heating body 400 are located form a path. That is, in this case, the power supply loop for guiding a current to the heating body 400 is turned on, which can provide stable working power for the heating body 400.

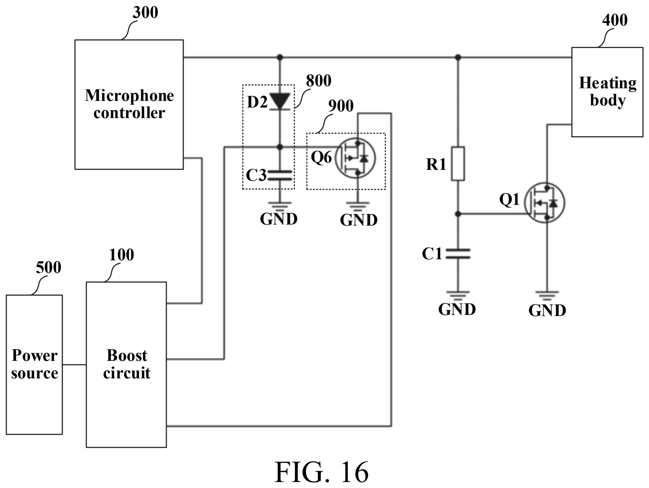

It could be understood that the boost enable circuit 800 and the feedback control circuit 900 as shown in FIG. 6 to FIG. 8 may also be applied to the structure as shown in FIG. 13 to FIG. 15. For example, FIG. 16 schematically shows a circuit structure obtained by applying the boost enable circuit 800 and the feedback control circuit 900 to the structure as shown in FIG. 15. A specific implementation process of the circuit principle may be referred to the description in FIG. 7 to FIG. 8, and it is not repeated herein.

Finally, it should be noted that the above embodiments are merely used for describing the technical solutions of the present application, but are not intended to limit the present application. Under the concept of the present application, the technical features in the above embodiments or different embodiments may be combined, the steps may be implemented in any sequence, and there may be many other changes in different aspects of the present application as described above. For brevity, those are not provided in detail. Although the present application is described in detail with the reference to the above embodiments, a person of ordinary skill in the art should understand that they may still make modifications to the technical solutions described in each of the above embodiments or make equivalent replacements to some technical features thereof, without departing from the scope of the technical solutions of the embodiments of the present application.

## Claims

1. An aerosol-generating device, comprising:
a heating body, configured to heat an aerosol-generating substrate to generate an aerosol;
a microphone controller, configured to output a first voltage when an airflow change caused by a vaping action is detected;
a power source, electrically connected to the microphone controller so as to supply power to the microphone controller;
a boost circuit, electrically connected between the microphone controller and the power source, and configured to be activated on the basis of the first voltage, boost a voltage of the power source, output a second voltage, and establish a power supply loop used for guiding a current for the heating body between the boost circuit, the microphone controller and the heating body; and
a switch circuit, electrically connected to the microphone controller,
wherein the switch circuit is configured to switch the power source to the boost circuit after the microphone controller outputs the first voltage to supply power to the microphone controller at the second voltage, while turning on the power supply loop.

2. The aerosol-generating device according to claim 1, wherein the power source directly supplies power to the microphone controller when the microphone controller does not output the first voltage.

3. The aerosol-generating device according to claim 2, wherein the switch circuit is further configured to cut off the power directly supplied by the power source to the microphone controller after the microphone controller outputs the first voltage.

4. The aerosol-generating device according to claim 1, wherein the switch circuit comprises a delay control branch configured to turn on the power supply loop after a first duration of delay starting from the output of the first voltage by the microphone controller.

5. The aerosol-generating device according to claim 4, wherein the delay control branch comprises:
a first energy storage sub-branch, electrically connected to the microphone controller, and configured to charge and discharge on the basis of the first voltage; and
a first switch sub-branch, electrically connected separately to the first energy storage sub-branch and the heating body, and configured to turn on or cut off the power supply loop on the basis of a voltage change in a charging and discharging process of the first energy storage sub-branch.

6. The aerosol-generating device according to claim 5, wherein the first energy storage sub-branch comprises a first resistor and a first capacitor, wherein:
a first end of the first resistor is electrically connected to the microphone controller;
a second end of the first resistor is electrically connected separately to the first switch sub-branch and a first end of the first capacitor; and
a second end of the first capacitor is grounded.

7. The aerosol-generating device according to claim 5 or 6, wherein the first switch sub-branch comprises a first switching transistor, wherein:
a first end of the first switching transistor is electrically connected to the first energy storage sub-branch, a second end of the first switching transistor is grounded, and a third end of the first switching transistor is electrically connected to a negative electrode of the heating body; and
a positive electrode of the heating body is electrically connected to the microphone controller.

8. The aerosol-generating device according to claim 5 or 6, wherein the first switch sub-branch comprises a second resistor, a second switching transistor and a third switching transistor, wherein:
a first end of the second switching transistor is electrically connected to the first energy storage sub-branch, a second end of the second switching transistor is grounded, a third end of the second switching transistor is electrically connected separately to a first end of the second resistor and a first end of the third switching transistor;
a second end of the third switching transistor is electrically connected separately to a second end of the second resistor and the microphone controller, and a third end of the third switching transistor is electrically connected to a positive electrode of the heating body; and
a negative electrode of the heating body is grounded.

9. The aerosol-generating device according to claim 1, wherein the switch circuit comprises a second energy storage sub-branch and a second switch sub-branch, wherein:
the second energy storage sub-branch is electrically connected separately to the boost circuit and the second switch sub-branch, and the second switch sub-branch is electrically connected between the power source and the microphone controller;
the second energy storage sub-branch is configured to charge and discharge on the basis of a change of the second voltage; and
the second switch sub-branch is configured to turn on or cut off the electrical connection between the power source and the microphone controller on the basis of a voltage change in a charging and discharging process of the second energy storage sub-branch.

10. The aerosol-generating device according to claim 9, wherein the second energy storage sub-branch comprises a third resistor, a second capacitor, and a first diode, wherein:
a first end of the third resistor is electrically connected separately to the boost circuit and the second switch sub-branch, and a second end of the third resistor is electrically connected separately to a first end of the second capacitor, an anode of the first diode and the second switch sub-branch;
a second end of the second capacitor is grounded; and
a cathode of the first diode is electrically connected to the boost circuit.

11. The aerosol-generating device according to claim 9 or 10, wherein the second switch sub-branch comprises a fourth switching transistor, a fifth switching transistor and a fourth resistor, wherein:
a first end of the fourth resistor is electrically connected separately to a second end of the fourth switching transistor and the boost circuit, a second end of the fourth resistor is electrically connected separately to a first end of the fourth switching transistor and a third end of the fifth switching transistor, and a third end of the fourth switching transistor is electrically connected to the power source; and a first end of the fifth switching transistor is electrically connected to the second energy storage sub-branch, and a second end of the fifth switching transistor is grounded; or
a first end of the fifth switching transistor is electrically connected to the second energy storage sub-branch, a second end of the fifth switching transistor is electrically connected separately to a second end of the fourth switching transistor and the boost circuit, and a third end of the fifth switching transistor is electrically connected separately to a first end of the fourth switching transistor and a first end of the fourth resistor; a third end of the fourth switching transistor is electrically connected with the power source; and a second end of the fourth resistor is grounded.

12. The aerosol-generating device according to claim 1, further comprising a boost enable circuit, wherein:
the boost enable circuit is electrically connected separately to the microphone controller and the boost circuit, and is configured to output an enable signal to the boost circuit on the basis of the first voltage so as to enable the boost circuit to operate.

13. The aerosol-generating device according to claim 12, further comprising a feedback control circuit, wherein:
the feedback control circuit is electrically connected to the boost enable circuit and the boost circuit, and is configured to output a feedback signal to the boost circuit on the basis of the first voltage.

14. The aerosol-generating device according to claim 12 or 13, wherein the boost enable circuit comprises a second diode and a third capacitor, wherein:
an anode of the second diode is electrically connected separately to the microphone controller and a positive electrode of the heating body, and a cathode of the second diode is electrically connected separately to a first end of the third capacitor and the boost circuit; and
a second end of the third capacitor is grounded.

15. The aerosol-generating device according to claim 13, wherein the feedback control circuit comprises a sixth switching transistor, wherein:
a first end of the sixth switching transistor is electrically connected to a first end of the boost enable circuit, a second end of the sixth switching transistor is grounded, and a third end of the sixth switching transistor is electrically connected to the boost circuit.
